# EUROPÄISCHE PATENTSCHRIFT

(11) **EP 0 583 596 B1**
(45) Veröffentlichungstag und Bekanntmachung des Hinweises auf die Patenterteilung: **14.02.1996**
(21) Anmeldenummer: 93110917.7
(22) Anmeldetag: 08.07.1993
(51) Int. Cl.: E01F 5/00, E02B 11/00, F16L 9/12

(54) **Sickerleitungsrohr**
Drainage pipe
Tuyau de drainage

(30) Priorität: 07.08.1992 DE 4226157
(43) Veröffentlichungstag der Anmeldung: 23.02.1994
(73) Patentinhaber: Drossbach GmbH & Co. KG, D-86641 Rain (DE)
(72) Erfinder: Drossbach, Hubert M. Dipl.-Ing., D-8859 Schloss Sinning (DE)
(74) Vertreter: Meyer, Ludgerus A., Dipl.-Ing.

(56) Entgegenhaltungen:
- WO-A-92/11485
- DE-A- 3 605 329
- DE-U- 8 807 415
- GB-A- 1 167 137

## Beschreibung

Die vorliegende Erfindung betrifft ein Sickerleitungsrohr aus Kunststoff nach dem Oberbegriff des Anspruchs 1.

Sickerleitungsrohre werden überwiegend im Straßenbau eingesetzt und längs der Straßenrandbereiche anstelle früher üblicher Straßengräben verlegt. Solche Sickerleitungsrohre werden in der Regel aus Kunststoff in endlichen Längen von z. B. 6m hergestellt.

Bei einer bekannten Ausführungsform ist der Querschnitt des Sickerleitungsrohres tunnelförmig gestaltet. Die Innenwandfläche ist glatt, ebenso der größte Teil der Außenwandfläche. Lediglich der obere Bereich der Außenwandfläche ist mit parallel zur Rohrachse verlaufenden Riefen versehen, in deren Bereich die Rohrwandung zur Aufnahme des Außenwassers quergeschlitzt ist. Ein solches Sickerleitungsrohr hat zwar den Vorteil einer hohen Abflußleistung zufolge der glatten Innenfläche. Dieses Rohr ist jedoch verhältnismäßig schwer, weil seine Wandstärke verhältnismäßig groß bemessen sein muß, um eine gewisse Steifigkeit zu erreichen, damit beim Transport die Durchbiegung reduziert und im Belastungszustand ausreichend Steifigkeit erreicht wird.

Diese Festigkeitsprobleme werden mit einer anderen, vorbekannten Querschnittsgestaltung der Sickerleitungsrohre bewältigt, bei der das Rohr über die gesamte Länge Querwellen aufweist, in deren Wellentäler quer zur Rohrachse schlitzartige Durchbrechungen eingeschnitten sind. Diese Querwellen ergeben bei reduzierter Wandstärke eine größere Steifigkeit des Sickerleitungsrohres, allerdings auf Kosten der Abflußleistung, die wegen der Querwellen nur etwa 2/3 der Abflußleistung glatter Rohre, bezogen auf gleiche Durchmesser, erreicht.

Die Tunnelform solcher Sickerleitungsrohre hat den Vorteil der einfachen Verlegung, weil die ebene Sohle des Rohres die richtige Montagestellung vorgibt. Andererseits sind aber tunnelförmige Sickerleitungsrohre nur mit höherem Werkzeugaufwand herstellbar und bringen Schwierigkeiten in der Abdichtung am Verbindungsbereich zweier benachbarter Rohre.

Es sind schließlich doppelwandige Rohre aus Kunststoff bekannt, bei denen das innenliegenden Rohr glattwandig ausgebildet ist und das außenliegende Rohr mit Querwellen versehen ist. Im Bereich der Wellentäler sind beide Rohre miteinander verbunden.

Aus der DE-OS 36 05 329 ist ein derartiges doppelwandiges Sickerleitungsrohr bekannt, das als Mehrzweck-, Vollsicker- oder Teilsickerrohr einsetzbar ist und aus einem glatten Innenrohr und einem gewellten äußeren Rohr besteht, wobei das gewellte Rohr längs der Rohrachse zwei die Wellentäler ausfüllende, hohle Leisten aufweist. die zueinander in einem Winkel von α = ca. 120°, bezogen auf die Rohrachse, angeordnet sind und die schlitzartigen Durchbrechungen sich lediglich in dem vom Winkel α eingegriffenen Bereich des Rohres befinden. Die dort genannten Leisten verhindern ein Abfließen des Sickerwassers längs der Wellentäler, und die Lage der Leisten ergibt eine gute Orientierungshilfe zum richtigen Verlegen des Sickerleitungsrohres. Bei diesem Zweiwandrohr können die Stege nicht beliebig verbreitert werden, da sonst die Scheiteldruckfestigkeit zu klein wird.

Es ist daher Aufgabe der vorliegenden Erfindung, ein Sickerleitungsrohr so auszugestalten, das es als Mehrzweck- oder Teilsickerrohr mit deutlich verbesserter Steifigkeit eingesetzt werden kann, das in der Herstellung kostengünstig ist und das eine verbesserte Entwässerung gestattet.

Diese Aufgabe wird durch die in Anspruch 1 angegebene Erfindung gelöst, bevorzugte Ausführungsformen der Erfindung sind in Unteransprüchen beschrieben.

Durch die zusätzliche Einführung eines dritten Rohres, das ein Außenrohr bildet, wird dem Rohrsystem eine weitaus größere Steifigkeit verliehen. Beschädigungen der Innenrohre durch Verlegung in harte oder stückige Materialien wie Kies werden vermieden. Es verbessert sich die Anbindung an das umgebende Füllmaterial.

Durch die Anordnung der schlitzartigen Durchlässe und ihrer korrespondierenden Eindrücke im Außenrohr ergibt sich auch eine Orientierungshilfe für die Verlegung von runden Rohren. Runde Rohre sind besonders stabil, widerstehen einem hohen Scheiteldruck, sind leicht verlegbar und lassen sich leicht miteinander verbinden.

Bringt man überhaupt keine schlitzartigen Durchbrechungen ein, dann ist das erfindungsgemäße, dreiwandige Sickerleitungsrohr als hochstabiles dichtes Kanalrohr einsetzbar.

Die trichterförmigen Eindrücke des Außenrohres sind außerdem erfindungsgemäß derart gestaltet, daß sie die Wassereintrittsöffnungen vor Verschmutzung schützen und hydraulische Vorteile für die Wasserführung schaffen.

Bei einer bevorzugten Ausgestaltung der Erfindung ist an einem Ende eine angeformte, aufgeweitete oder angespritzte oder angeschweißte Muffe vorhanden. Ein Dichtungsring kann in eine Nut eingelegt werden, so daß sich eine problemlose, axiale Verbindung von Sickerleitungsrohren untereinander ergibt.

Die Erfindung wird nachstehend anhand eines Ausführungsbeispiels näher erläutert. Es zeigen:
- Fig. 1: eine Draufsicht auf ein Sickerleitungsrohr,
- Fig. 2: eine Draufsicht auf einen Ausschnitt des Sickerleitungsrohres,
- Fig. 3: einen Querschnitt durch ein kreisrundes Sickerleitungsrohr,
- Fig. 4: einen vertikalen Längsschnitt durch ein Sickerleitungsrohr,
- Fig. 5 a-c: verschiedene Altemativen für Durchbrüche,
- Fig. 6: einen Längsschnitt im Bereich der Verbindung zweier Sickerleitungsrohre,
- Fig. 7: einen Längsschnitt im Bereich der Verbindung zweier Rohre mit einem Rohr mit angeschweißter Muffe.

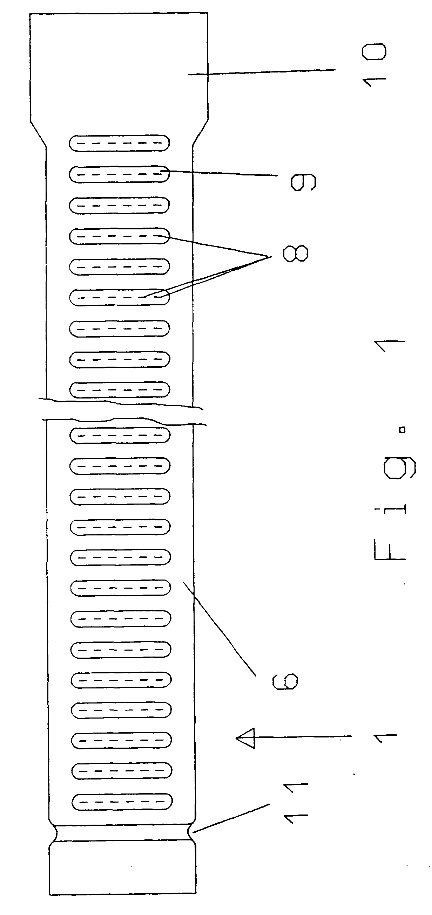

Das in Fig. 1 gezeigte Sickerleitungsrohr 1 besteht aus einem dreiwandigen Rohr, dessen äußeres Rohr im wesentlichen glatt ausgebildet ist. Im oberen, gezeigten Bereich, weist das äußere Rohr 6 Eindrückungen 9 auf, die über einen Winkelbereich von beispielsweise 120° in Umfangsrichtung als rillenartige Vertiefungen ausgebildet sind. In den Vertiefungen befinden sich Durchbrüche 8, die eine Verbindung zwischen der Umgebung des Rohres und dem Inneren des Rohres schaffen. An einem Ende ist eine angeformte, aufgeweitete Muffe 10 ausgebildet, in die das Spitzende eines anderen entsprechenden Rohrabschnitts eingeführt werden kann. Vorzugsweise sind im Bereich der Muffe keine Vertiefungen im Außenrohr ausgebildet.

Der Bereich des Spitzendes des Rohres weist ebenfalls keine Vertiefungen auf, sondem lediglich eine umlaufende Nut 11, in die ein O-Ring oder eine Lippendichtung eingesetzt werden kann, so daß beim Einschieben des Spitzendes in ein anderes Rohr eine dichte Verbindung erreicht ist. Vorzugsweise wird die Nut jedoch in der Muffe am anderen Ende des Rohres ausgebildet.

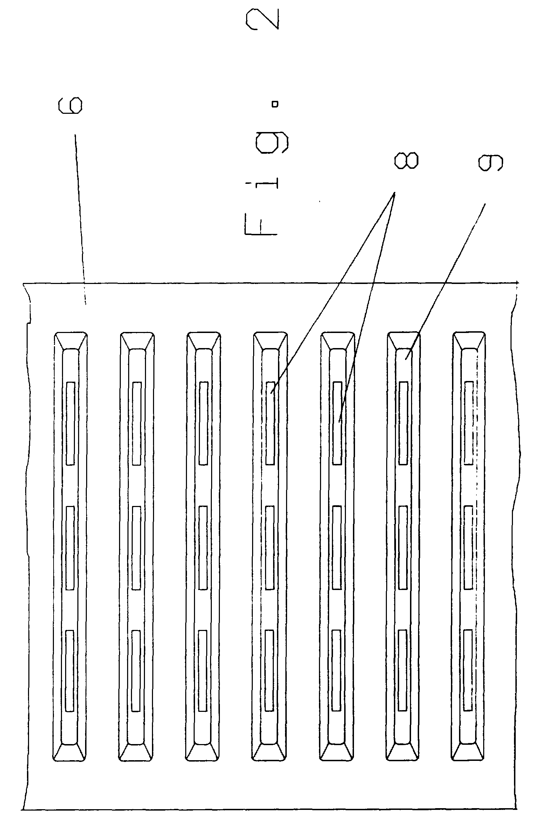

Fig. 2 zeigt eine vergrößerte Teilaufsicht von Fig. 1, aus der die trichterförmige Ausformung der Eindrückungen 9 erkennbar ist. Die Eindrückungen folgen den Wellentälern des mittleren Rohres. Es sind in jeder Eindrückung 9 drei Schlitze 8 dargestellt, die auf herkömmlicher Weise eingefräst, eingeschnitten, eingestanzt oder eingesägt werden können. Es können anstelle von 3 Schlitzen auch mehr Schlitze verwendet werden.

Durch die trichterförmige Ausbildung der Vertiefungen des Außenrohres werden die Wassereintrittsöffnungen vor Verschmutzung geschützt und es ergeben sich hydraulische Vorteile für die Wasserzuführung.

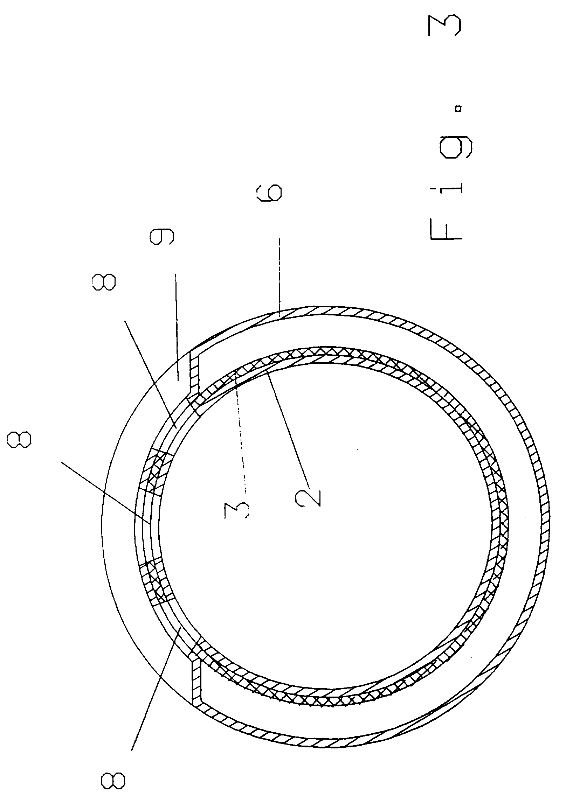

Fig. 3 zeigt einen Querschnitt durch ein erfindungsgemäßes Rohr. Das Innenrohr 2 ist in Längsrichtung glatt ausgebildet und von einem Wellrohr 3 umgeben, dessen Wellentäler 4 jeweils mit dem Innenrohr 2 verschweißt sind. Die Wellenrücken sind mit einem weiteren in Längsrichtung im wesentlichen glatten Rohr verbunden, insbesondere verschweißt, das das Wellrohr 3 umgibt. Fig. 3 zeigt eine Schnittebene, in der ein Tal des Wellrohres 3 mit dem innen liegenden Rohr 2 verbunden ist.

Im oberen Bereich des Rohres, bezogen auf die Einbaulage, ist das äußere Rohr 6 nach innen eingedrückt und mit einem Tal des Wellrohres in diesem Bereich verschweißt. An den Stellen der Eindrückungen ergibt sich damit eine dreifache Rohrstärke. In diesem Bereich befinden sich die Durchbrüche 8.

Die Schlitzung des Sickerleitungsrohres kann entweder durch Sägen, durch Stanzen oder Rotationsschneiden erfolgen. Es können auch Bohrungen vorgesehen sein, wobei jedoch sichergestellt sein muß, daß gemäß DIN 4262 pro Meter mindestens 50 cm Schlitzfläche vorhanden bleiben.

Die Eindrückungen des Außenrohres sind bevorzugt als längliche Vertiefungen ausgebildet, es können jedoch auch mehrere nebeneinander liegende Vertiefungen vorgesehen werden. Insbesondere bei der Ausbildung der Durchbrechungen als Bohrungen kann vorgesehen sein, daß das Außenrohr punktförmig eingedrückt wird.

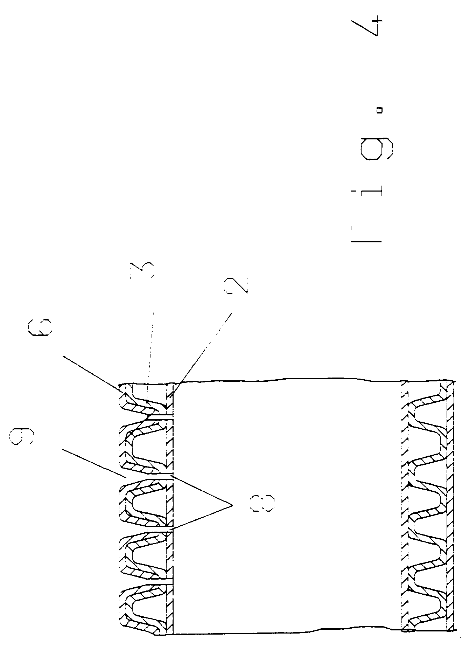

Figur 4 zeigt ein erfindungsgemäßes Rohr im vertikalen Schnitt. Es ist deutlich zu erkennen, daß das äußere Rohr 6 an der Oberseite des Rohres in die Wellentäler des mittleren Rohres 3 eingedrückt und an den Stellen 8 perforiert ist.

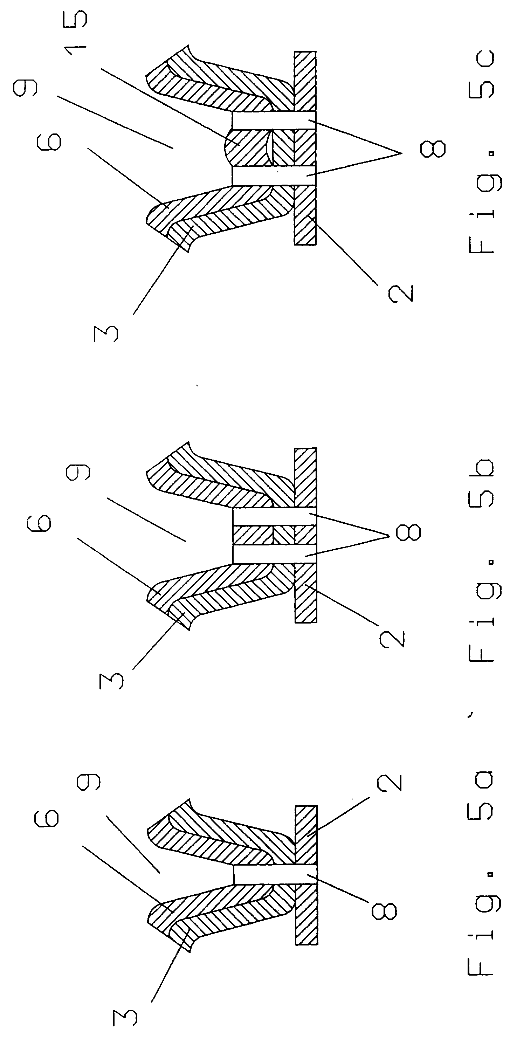

Die Figuren 5 a-c zeigen verschiedene Arten von Durchbrechungen des Sickerleitungsrohres. Figur 5 a zeigt eine vergrößerte Darstellung einer einfachen Schlitzung, Figur 5 b zeigt zur Verringerung der einzelnen Schlitzgröße zwei parallel liegende Schlitze, die in einem Wellental liegen. Schließlich zeigt Figur 5 c zwei parallele Schlitze, zwischen denen das Außenrohr noch eine Erhebung 15 aufweist. Die Schlitze können in Umfangsrichtung in allen Ausführungsformen der Figur 5 gegeneinander versetzt sein, um die Gesamtfestigkeit des Rohres weiter zu verbessern.

Vorzugsweise befinden sich in jeder Rille des Wellrohres entsprechende Eindrücke des Außenrohres. Sofem die Schlitze ausreichend groß und in ausreichender Menge vorhanden sind, kann auch vorgesehen sein, beispielsweise nur jedes zweite Wellental mit einer Eindrückung des Außenrohres zu verbinden.

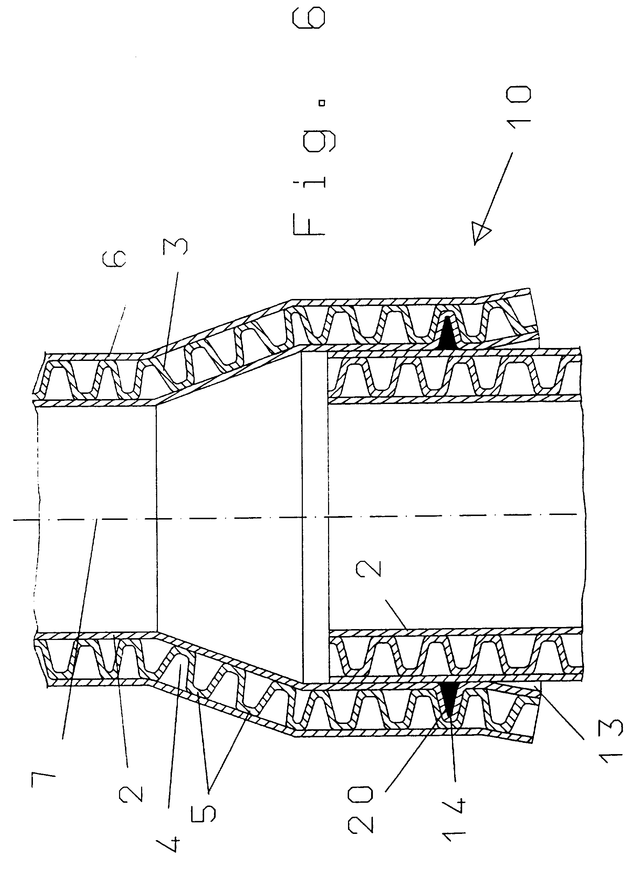

Fig. 6 zeigt die Verbindung zweiter Sickerleitungsrohrabschnitte. Das muffenseitige Ende eines Sickerleitungsrohres ist dabei so aufgeweitet, daß das spitzenseitige Ende eines Sickerleitungsrohres ohne weiteres in die Muffe eingeschoben werden kann. Es ist hier noch einmal zu sehen, daß das glattwandige Innenrohr von einem Wellrohr umgeben ist, das im Bereich der Wellentäler mit dem Innenrohr verschweißt ist. Das Außenrohr 6 ist glatt ausgebildet und ist mit den äußeren Scheitelflächen des Wellrohres 3 verbunden. Der Innendurchmesser des muffenseitigen Endes des Sickerleitungsrohres ist geringfügig größer als der Durchmesser des spitzenseitigen Endes ausgebildet. Vorzugsweise kann in eine umlaufende Nut des spitzenseitigen Endes oder einer Sicke 20 des muffenseitigen Endes ein Dichtungsring, beispielsweise ein O-Ring oder eine Lippendichtung, eingelegt werden, wobei die Nut durch Eindrücken des äußeren Rohres 6 über den gesamten Umfang in ein Wellental des Wellrohres hergestellt wird, oder aus einer sickenförmigen Aufweitung 20 des inneren Rohres im muffenseitigen Ende (wie dargestellt) gebildet wird.

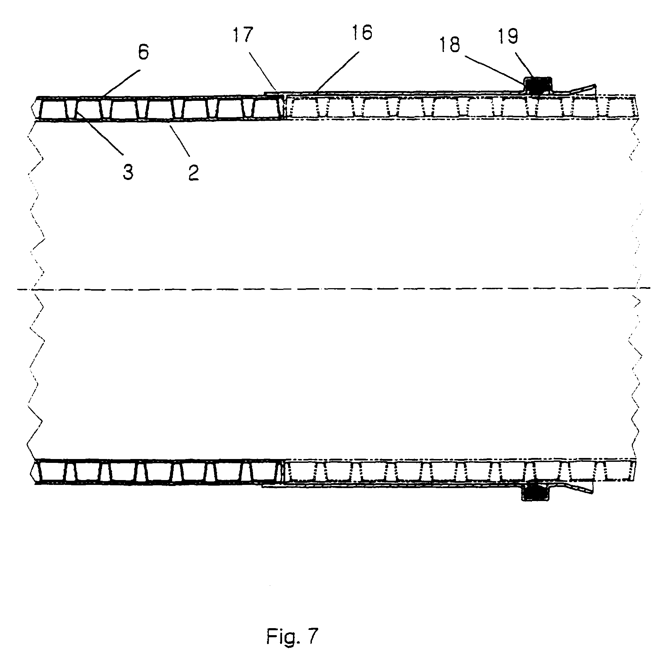

Fig. 7 zeigt die Ausbildung eines Rohres mit angeschweißter Muffe, wie es insbesondere bei großen Durchmessern bevorzugt wird, da eine Aufweitung hier einen erheblichen Aufwand bedeutet. Die Muffe 16 wird hier ein Stück über das stumpf abgeschnittene Ende eines Rohres geschoben und angeschweißt oder angespritzt. Die Muffe ist einwandig ausgebildet und weist einen Innendurchmesser auf, der geringfügig größer als der Außendurchmesser des Sickerleitungsrohres ist.

Es ist ein ringförmiger Abschluß 17 vorhanden, der ein in der Länge definiertes Aufschieben der Muffe auf das Sickerleitungsrohr gewährleistet.

Am vorderen Ende der Muffe befindet sich ein umlaufende Sicke 18, in die ein Dichtungsring 19, insbesondere eine Lippendichtung, einlegbar ist. Diese Art der Muffenverbindung hat insbesondere den Vorteil, daß das Sickerleitungsrohr in undefinierten Längen ohne besondere Endausbildung herstellbar ist.

Durch das glatte Außenrohr kann dieses bündig in Beton oder bindigen Kies verlegt werden, wobei ein guter Anschluß an das Rohr gewährleistet ist, so daß auf das Sickerleitungsrohr auftreffendes Wasser nicht seitlich am Sickerleitungsrohr herabfließen kann, sondern nahezu ausschließlich in die Durchbrechungen 8 an der Oberseite des Sickerleitungsrohres eintreten wird.

Die erfindungsgemäßen Rohre können aus Polyethylen, Polypropylen, das einen höheren E-Modul aufweist, und in bestimmten Fällen auch aus PVC hergestellt sein. Zur Herstellung eines erfindungsgemäßen Sickerleitungsrohres wird ein nach dem Stand der Technik hergestelltes Doppelwandrohr durch einen weiteren Querspritzkopf mit dem dritten Rohr umgeben. Unmittelbar im Anschluß an den Düsenaustritt wird das dritte Rohre entweder durch Formstempel oder mitwandernde Formhälften eingedrückt. Nach Abkühlung in einem Wasserbad und Säubern des Rohres können das Schlitzen, Ablängen und die Muffenausbildung auf bekannte Weise erfolgen.

### Bezugszeichenliste

1 Sickerleitungsrohr
2 glattwandiges Innenrohr
3 Wellrohr
4 Wellental
5 Querwellen
6 Außenrohr
7 Rohrachse
8 schlitzartige Durchbrechungen
9 Eindrückung
10 aufgeweitete Muffe
11 umlaufende Nut
13 Abschrägung
14 Dichtung
15 Erhebung
16 Muffe
17 Abschluß
18 Sicke
19 Dichtungsring
20 Sicke

## Patentansprüche

1. Sickerleitungsrohr (1), insbesondere zur Entwässerung von Untergründen, im wesentlichen bestehend aus einem doppelwandigen Kunststoffrohr mit einem glattwandigen Innenrohr (2) und mit einem das Innenrohr umgebenden Wellrohr (3), dessen Wellentäler (4) mit dem Innenrohr fest verbunden sind, wobei das Sickerleitungsrohr (1) in den Wellentälern (4) Durchbrechungen (8) für den Durchlaß von Sickerflüssigkeit aufweist, dadurch gekennzeichnet, daß das Sickerleitungsrohr (1) mit einem weiteren äußeren außerhalb des Bereichs der Durchbrechungen (8) im wesentlichen glatten Rohr (6) überzogen ist, das im Bereich von Durchbrechungen (8) in die Wellentäler (4) des Wellrohres (3) eingedrückt, mit dem Wellrohr verbunden und perforiert ist.

2. Sickerleitungsrohr nach Anspruch 1, dadurch gekennzeichnet, daß das Sickerleitungsrohr (1) ein Teil- oder Mehrzwecksickerrohr ist, dessen Durchbrechungen (8) über einen Umfangsbereich von etwa 110 - 220° verteilt sind.

3. Sickerleitungsrohr nach Anspruch 2, dadurch gekennzeichnet, daß das Sickerleitungsrohr (1) über einen Scheitelwinkelbereich von etwa 220° mehrfach durchbrochen ist.

4. Sickerleitungsrohr nach Anspruch 1, dadurch gekennzeichnet, daß die Eindrückungen (9) des äußeren Rohres (6) den Wellentälem (4) des Wellrohres (3) folgen.

5. Sickerleitungsrohr nach Anspruch 1, dadurch gekennzeichnet, daß es in einem spitzenseitigen Endbereich eine umlaufende Nut (11) aufweist.

6. Sickerleitungsrohr nach Anspruch 1, dadurch gekennzeichnet, daß es in einem muffenseitigen Endbereich eine innen umlaufende Nut aufweist.

7. Sickerleitungsrohr nach Anspruch 1, dadurch gekennzeichnet, daß es an einem Ende eine angeforrnte, aufgeweitete oder angespritzte oder angeschweißte Muffe (10) aufweist, deren Innendurchmesser geringfügig größer als der Außendurchmesser des Sickerleitungsrohres (1) im übrigen Rohrbereich ist.

8. Sickerleitungsrohr nach Anspruch 5 oder 6, dadurch gekennzeichnet, daß ein Dichtungsring in die umlaufende Nut (11) eingelegt ist.

9. Sickerleitungsrohr nach Anspruch 1, dadurch gekennzeichnet, daß mehrere längs hintereinander liegende schlitzartige Durchbrechungen (8) im Bereich einer Eindrückung (9) des Außenrohres (6) vorgesehen sind.

10. Sickerleitungsrohr nach Anspruch 1, dadurch gekennzeichnet, daß die schlitzartigen Durchbrechungen (8) in einer Eindrückung (9) in Umfangsrichtung zueinander versetzt ausgebildet sind.

11. Sickerleitungsrohr nach Anspruch 7, dadurch gekennzeichnet, daß die schlitzartigen Durchbrechungen (8) und die jeweiligen Eindrückungen (9) als Löcher ausgebildet sind.

12. Sickerleitungsrohr nach Anspruch 1, dadurch gekennzeichnet, daß in jeder Eindrückung (9) mehrere Doppelschlitze (8) mit Zwischenerhebungen (15) ausgebildet sind.

## Claims

1. Seepage conduit pipe (1), particularly for underground drainage, consisting essentially of a double-walled plastics pipe with a smooth-walled inner pipe (2) and with a corrugated pipe (3), surrounding the inner pipe, of which the corrugation troughs (4) are fixed to the inner pipe, the seepage conduit pipe (1) having openings (8) in the corrugation troughs (4) for the passage of seepage fluid, characterized in that the seepage conduit pipe (1) is covered with a further outer, essentially smooth pipe (6), outside the region of the openings (8), which, in the region of the openings (8), is indented into the corrugation troughs (4) of the corrugated pipe (3), and joined to the corrugated pipe and perforated.

2. Seepage conduit pipe according to Claim 1, characterized in that the seepage conduit pipe (1) is a partial or multipurpose seepage pipe whose openings (8) are distributed over a circumferential range of about 110° - 220°.

3. Seepage conduit pipe according to Claim 2, characterized in that the seepage conduit pipe (1) has multiple openings over an included angle range of about 220°.

4. Seepage conduit pipe according to Claim 1, characterized in that the indentations (9) of the outer pipe (6) follow the corrugation troughs (4) of the corrugated pipe (3).

5. Seepage conduit pipe according to Claim 1, characterized in that it has a circumferential groove (11) in an end region at its tapered end.

6. Seepage conduit pipe according to Claim 1, characterized in that it has an inner circumferential groove in an end region at its sleeve end.

7. Seepage conduit pipe according to Claim 1, characterized in that at one end it has a formed-on, widened, bonded-on or welded-on sleeve (10), whose inner diameter is slightly greater than the outer diameter of the seepage conduit pipe (1) in the remaining region of the pipe.

8. Seepage conduit pipe according to either of Claims 5 or 6, characterized in that a sealing ring is inserted into the circumferential groove (11).

9. Seepage conduit pipe according to Claim 1, characterized in that there are several slot-type openings (8), disposed in succession longitudinally, in the region of an indentation (9) of the outer pipe (6).

10. Seepage conduit pipe according to Claim 1, characterized in that the slot-type openings (8) are fashioned in an indentation (9), mutually offset in the circumferential direction.

11. Seepage conduit pipe according to Claim 7, characterized in that the slot-type openings (8) and the respective indentations (9) are fashioned as holes.

12. Seepage conduit pipe according to Claim 1, characterized in that several double slots (8) with intermediate elevations (15) are fashioned in each indentation (9).

## Revendications

1. Tuyau de drainage (1), en particulier pour le drainage de sous-sols, composé essentiellement d'un tuyau en matière plastique à double paroi formé d'un tuyau intérieur à paroi lisse (2) et d'un tuyau ondulé (3) qui entoure ledit tuyau intérieur et dont les creux d'ondulations (4) sont solidaires de celui-ci, le tuyau de drainage (1) comportant dans les creux (4) des ouvertures (8) pour le passage du liquide à évacuer, caractérisé en ce que le tuyau de drainage (1) est recouvert d'un autre tuyau extérieur (6) qui est sensiblement lisse en dehors de la zone des ouvertures (8) tandis que dans la zone d'ouvertures (8), il est perforé et relié au tuyau ondulé en étant pressé dans les creux (4) du tuyau ondulé (3).

2. Tuyau de drainage selon la revendication 1, caractérisé en ce que le tuyau de drainage (1) est un tuyau de drainage partiel ou à usages multiples dont les ouvertures (8) sont réparties sur une zone périphérique d'environ 110 à 220°.

3. Tuyau de drainage selon la revendication 2, caractérisé en ce que le tuyau de drainage (1) est percé plusieurs fois sur une zone d'angles de sommets d'environ 220°.

4. Tuyau de drainage selon la revendication 1, caractérisé en ce que les enfoncements (9) du tuyau extérieur (6) suivent les creux d'ondulations (4) du tuyau ondulé (3).

5. Tuyau de drainage selon la revendication 1, caractérisé en ce qu'il comporte, dans une zone d'extrémité située côté pointe, une rainure circulaire (11).

6. Tuyau de drainage selon la revendication 1, caractérisé en ce qu'il comporte, dans une zone d'extrémité située côté manchon, une rainure circulaire intérieure.

7. Tuyau de drainage selon la revendication 1, caractérisé en ce qu'il comporte, à une extrémité, un manchon (10) rapporté, élargi, appliqué par injection ou soudé dont le diamètre intérieur est légèrement supérieur au diamètre extérieur du tuyau de drainage (1) dans le reste de la zone du tuyau.

8. Tuyau de drainage selon la revendication 5 ou 6, caractérisé en ce qu'une bague d'étanchéité est insérée dans la rainure circulaire (11).

9. Tuyau de drainage selon la revendication 1, caractérisé en ce que plusieurs ouvertures en forme de fentes (8) sont prévues longitudinalement les unes derrière les autres dans la zone d'un enfoncement (9) du tuyau extérieur (6).

10. Tuyau de drainage selon la revendication 1, caractérisé en ce que les ouvertures en forme de fentes (8) formées dans un enfoncement (9) sont décalées les unes par rapport aux autres dans le sens périphérique.

11. Tuyau de drainage selon la revendication 7, caractérisé en ce que les ouvertures en forme de fentes (8) et les emfoncements (9) correspondants sont conçus comme des trous.

12. Tuyau de drainage selon la revendication 1, caractérisé en ce que plusieurs fentes doubles (8) pourvues de bosses intermédiaires (15) sont formées dans chaque enfoncement (9).
